# EUROPEAN PATENT SPECIFICATION

(11) **EP 3 211 503 B1**
(45) Date of publication and mention of the grant of the patent: **04.09.2019**
(21) Application number: 15852050.2
(22) Date of filing: 28.07.2015
(51) Int. Cl.: G05D 1/02, A47L 11/24, A47L 9/28

(54) **CHARGING BASE OF CLEANING ROBOT, AND CLEANING ROBOT**
LADESOCKEL FÜR EINEN REINIGUNGSROBOTER UND REINIGUNGSROBOTER
BASE DE CHARGE DE ROBOT DE NETTOYAGE ET ROBOT DE NETTOYAGE

(30) Priority: 23.10.2014 CN 201410572029; 23.10.2014 CN 201420616932 U
(43) Date of publication of application: 30.08.2017
(73) Proprietor: Jiangsu Midea Cleaning Appliances Co., Ltd., Xiangcheng Economic Development Zone Suzhou, Jiangsu 215100 (CN); Midea Group Co., Ltd., Foshan, Guangdong 528311 (CN)
(72) Inventor: SHEN, Qiang, Suzhou Jiangsu 215100 (CN); SHEN, Luokun, Suzhou Jiangsu 215100 (CN)
(74) Representative: RGTH
(86) International application number: PCT/CN2015/085293
(87) International publication number: WO 2016/062143

(56) References cited:
- EP-A1- 2 449 938
- CN-A- 1 666 162
- CN-A- 103 479 307
- CN-U- 203 882 195
- CN-U- 204 203 769
- JP-A- 2006 268 497
- KR-B1- 101 437 778
- KR-B1- 101 437 778
- US-A1- 2012 116 588

## Description

### FIELD

The present disclosure relates to a technical field of household appliances, specifically, especially to a charging base of a robot cleaner and a robot cleaner.

### BACKGROUND

A robot cleaner existing in the prior art is not advanced enough in homing-charging technology, which generally adopts a random collision to find a position of the charging base. It takes a long time to find out the charging base in a larger room.

KR 101437778 B1 discloses a guide signal transmitter of the docking station of a robot cleaner, wherein a first and a second shielding members are provided to improve the linearity of the infrared signal and to prevent different infrared signals generated by the different infrared light sources from interfering with each other.

### SUMMARY

The present disclosure seeks to solve at least one of the technical problems existing in the prior art.

Accordingly, a charging base of a robot cleaner is provided in the present disclosure. The charging base of the robot cleaner makes the robot cleaner to be characterized by a rapid positioning speed.

Another objective of the present disclosure is aimed at providing a robot cleaner having the charging base above.

A charging base of a robot cleaner is provided according to an aspect of the present disclosure, including: a stand provided with a charging terminal; a plurality of columns of infrared light sources arranged along a horizontal direction, the number of columns of the infrared light sources being an odd number greater than or equal to 3 and each column of the infrared light sources including at least one infrared light source; at least one optical path assembly positioned downstream of a light exit direction of the infrared light sources, each optical path assembly including two absorption plates, a plurality of light reflection chambers being defined between the two absorption plates, the plurality of light reflection chambers being communicated with each other through a light exit channel, an end of the light exit channel being corresponding to one of the infrared light sources located in a middlemost column; a plurality of light shielding plates respectively adjacent to the infrared light sources of other columns except the middlemost column so as to make light rays emitted by the infrared light sources of odd columns do not intersect with each other outside a predetermined distance.

In the charging base of the robot cleaner according to embodiments of the present disclosure, by means of the plurality of light shielding plates and the optical path assembly, an infrared light field produced from the plurality of columns of infrared light sources is divided into a plurality of zones. The robot cleaner is able to judge its own position information according to the infrared light rays from different zones, thus a positioning speed of the robot cleaner is increased effectively, and meanwhile a positioning accuracy of the robot cleaner is increased. In addition, with the light reflection chamber defined by the optical path assembly, the infrared light rays are made to pass through the plurality of light reflection chambers sequentially, superfluous infrared light rays are absorbed by the absorption plate in the light reflection chamber and remainder infrared light rays are exited along the light exit channel, thus reducing a possibility of phenomena such as diffraction or pinhole imaging happened to the infrared light rays, further increasing a unidirectionality of the propagation of the infrared light rays, and hence increasing a parallelism of the infrared light rays emitted from the light exit channel.

According to the invention, the infrared light sources include a first column, a second column, and a third column arranged horizontally successively.

Furthermore, the infrared light source of the second column includes two infrared light sources arranged in an up-and-down direction and having different light exit intensities.

According to some embodiments of the present disclosure, a section of each light reflection chamber is formed to be a parallelogram.

According to some embodiments of the present disclosure, a section of each light reflection chamber is formed to be a rhombus.

According to some embodiments of the present disclosure, the light reflection chamber, nearest to the infrared light sources, of the plurality of light reflection chambers has a section area larger than sections areas of other light reflection chambers.

According to some embodiments of the present disclosure, the section areas of the other light reflection chambers decrease gradually along the light exit direction.

According to some embodiments of the present disclosure, the sections areas of the other light reflection chambers are all equal.

According to some embodiments of the present disclosure, the light exit channel has a width increasing gradually along the light exit direction.

According to some embodiments of the present disclosure, the predetermined distance is a vertical distance between the infrared light sources and the charging terminal.

According to some embodiments of the present disclosure, the first column and the third column both include one infrared light source.

According to some embodiments of the present disclosure, the infrared light sources of the first column and the third column are in the same horizontal line as any one of the infrared light sources of the second column.

According to some embodiments of the present disclosure, a connection line of the infrared light sources of the first column and the third column passes between two infrared light sources of the second column.

According to some embodiments of the present disclosure, the infrared light sources of each of three columns include two infrared light sources arranged in an up-and-down direction and having different light exit intensities.

According to some embodiments of the present disclosure, positions of the infrared light sources of the three columns are in one-to-one correspondence in a horizontal direction.

According to some embodiments of the present disclosure, the infrared light sources of the first column and the third column are symmetrical with respect to each other at two sides of the infrared light sources of the second column.

According to some embodiments of the present disclosure, the charging base of the robot cleaner further includes a light source pedestal disposed to the charging base, in which the infrared light sources of odd columns are all disposed to the light source pedestal.

A robot cleaner is provided according to another aspect of the present disclosure, which includes the charging base above.

In the robot cleaner according to embodiments of the present disclosure, by means of the plurality of light shielding plates and the optical path assembly, an infrared light field produced from the plurality of columns of infrared light sources is divided into a plurality of zones. The robot cleaner is able to judge its own position information according to the infrared light rays from different zones, thus a positioning speed of the robot cleaner is increased effectively, and meanwhile a positioning accuracy of the robot cleaner is increased. In addition, with the light reflection chamber defined by the optical path assembly, the infrared light rays are made to pass through the plurality of light reflection chambers sequentially, superfluous infrared light rays are absorbed by the absorption plate in the light reflection chamber and remainder infrared light rays are exited along the light exit channel, thus reducing a possibility of phenomena such as diffraction or pinhole imaging happened to the infrared light rays, further increasing a unidirectionality of the propagation of the infrared light rays, and hence increasing a parallelism of the infrared light rays emitted from the light exit channel.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the present disclosure will become apparent and more readily appreciated from the following descriptions made with reference to the drawings, in which:
Fig.1 is a perspective view of a charging base of the robot cleaner according to an embodiment of the present disclosure;
Fig. 2 is a section view of Fig. 1;
Fig. 3 is an exploded perspective of an optical path assembly in Fig. 1;
Fig. 4 is a schematic view of the optical path assembly in Fig. 1;
Fig. 5 is a schematic view of the charging base of the robot cleaner in Fig. 1;
Fig. 6 is a schematic view of the charging base of the robot cleaner in Fig. 1;
Fig. 7- Fig. 12 are schematic views of the infrared light sources according to different embodiments of the present disclosure.

### Reference numerals:

charging base 100,
stand 10, charging terminal 11,
infrared light sources 20,first column 21, second column 22, third column 23,
optical path assembly 30, absorption plate 31, light reflection chamber 32, light exit channel 33,
light shielding plate 40, light source pedestal 50.

### DETAILED DESCRIPTION

Embodiments of the present disclosure will be described in detail in the following. Examples of the embodiments are shown in the drawings, and the same or similar elements and the elements having same or similar functions are denoted by like reference numerals throughout the descriptions. The embodiments described with reference to the drawings are illustrative, which is only used to explain the present disclosure and shouldn't be construed to limit the present disclosure.

In the specification, it should be understood that terms such as "width", "depth", "up", "down" ,"front", "rear", "left", "right", "vertical", "horizontal", "top", "bottom", "inner", "outer" and "axial direction" should be construed to refer to the orientation as then described or as shown in the drawings under discussion. These relative terms are for convenience of description and do not require that the present disclosure be constructed or operated in a particular orientation, so shall not be construed to limit the present disclosure. In addition, terms such as "first" and "second" are used herein for purposes of description and are not intended to indicate or imply relative importance or significance or to imply the number of indicated technical features. Thus, the feature defined with "first" and "second" may comprise one or more of this feature. In the description of the present disclosure, "a plurality of' means two or more than two, unless specified otherwise.

In the present disclosure, it should be noted that, unless specified or limited otherwise, the terms "mounted," "connected," "coupled" should be understood broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

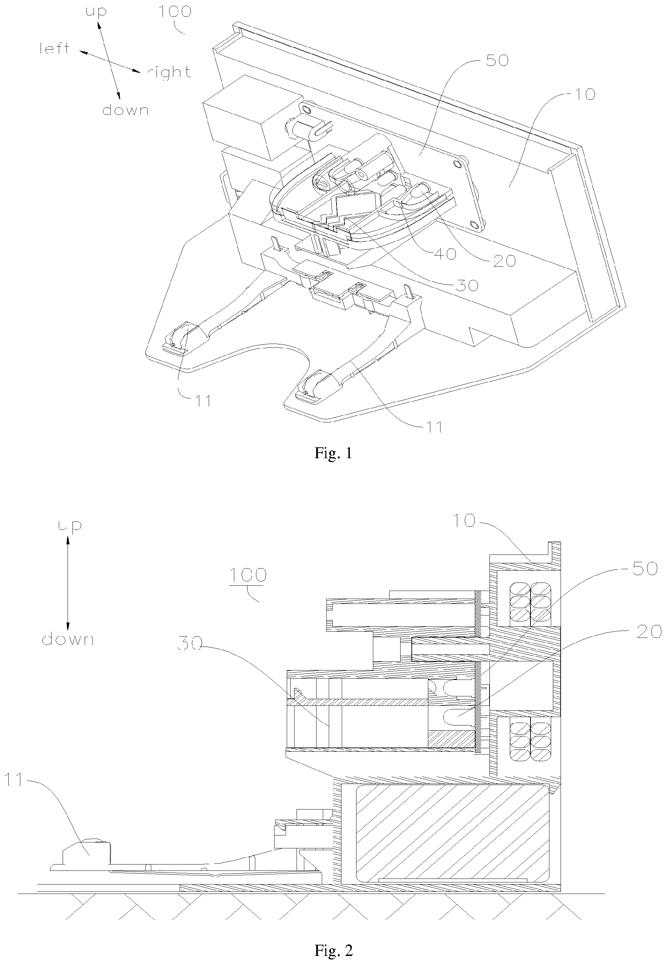

A charging base 100 of a robot cleaner according to embodiments of the present disclosure will be described with reference to Fig. 1 to Fig. 12.

As shown in Fig. 1 to Fig. 12, the charging base 100 of the robot cleaner according to embodiments of the present disclosure includes a stand 10, an infrared light source 20, at least one optical path assembly 30 and a plurality of light shielding plates 40.

Specifically, the stand 10 is provided with a charging terminal 11. A plurality of columns of infrared light sources 20 are arranged along a horizontal direction. As shown in Fig. 1, the plurality of columns of infrared light sources 20 are disposed to the stand 10 along a left and right direction (a left and right direction shown in Fig. 1). The number of columns of the infrared light sources 20 is an odd number greater than or equal to 3 and each column of the infrared light sources 20 includes at least one infrared light source 20. Each infrared light source 20 can emit countless infrared light rays. The plurality of columns of infrared light sources 20 defines an infrared light field around the stand. When the robot cleaner enters the infrared light field, it can calculate out its own position information according to information of the infrared light rays collected by itself, thus realizing the positioning of the robot cleaner. It should be noted that, the more position information the robot cleaner get in the infrared light field, the higher the reliability of the self-positioning of the robot cleaner, and thus, the greater the probability of judging the position of the charging terminal 11 accurately by the robot cleaner.

The optical path assembly 30 is positioned downstream of a light exit direction of the infrared light sources 20. Each optical path assembly 30 includes two absorption plates 31. When the infrared light rays irradiate the absorption plate 31, a reflection phenomenon occurs to the infrared light rays. In the reflection process of the infrared light rays, some infrared light rays are absorbed by the absorption plate 31. In order to allow more infrared light rays to be absorbed by the absorption plate 31, a plurality of light reflection chambers 32 are defined between the two absorption plates 31, thus the infrared light rays can be reflected repeatedly in the light reflection chamber 32. In an example of the present disclosure, the plurality of light reflection chambers 32 are arranged along the light exit direction successively.

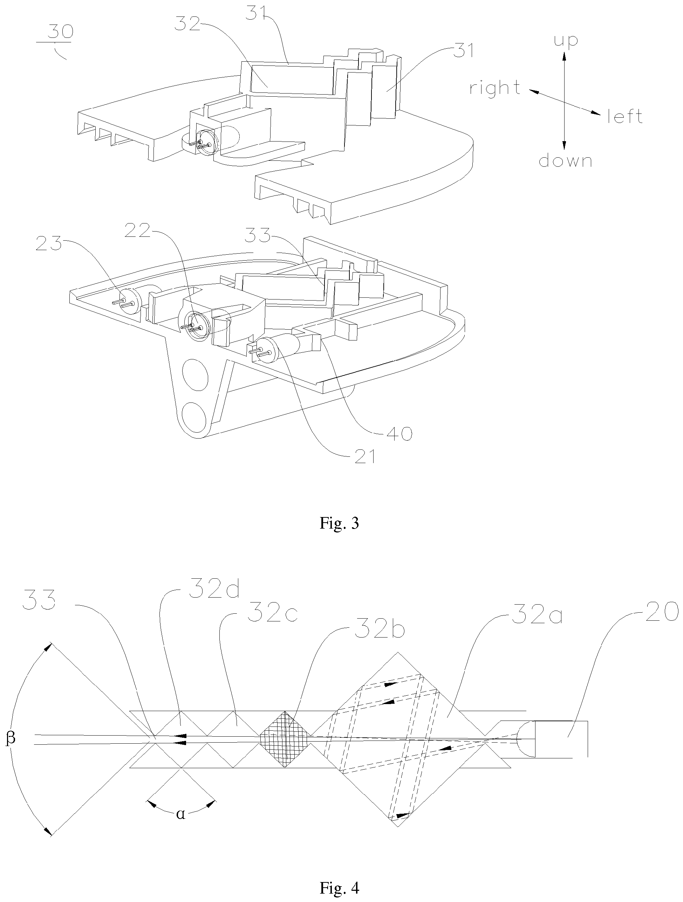

For convenience of descriptions, taking one of the infrared light rays emitted from the infrared light sources 20 as an example, the light exit direction indicates a direction extending outwards from the infrared light sources 20, a downstream position indicates a position away from the infrared light sources 20 along the light exit direction of the infrared light rays; an upstream position indicates a position adjacent to the infrared light sources 20 relative to the downstream position. For example, as shown in Fig. 4, a light reflection chamber 32a is located upstream of a light reflection chamber 32b, and a light reflection chamber 32b is located upstream of a light reflection chamber 32c.

As shown in Fig. 3 to Fig. 4, the plurality of light reflection chambers 32 are communicated with each other through a light exit channel 33. For example, the light reflection chamber 32a and the light reflection chamber 32b are communicated with each other through the light exit channel 33. The infrared light rays are reflected on a side wall of the light reflection chamber 32a repeatedly after entering the light reflection chamber 32a. A part of the infrared light rays are absorbed by the side wall of the light reflection chamber 32a, and the remainder of the infrared light rays can enter the light reflection chamber 32b through the light exit channel 33. Thus, only a part of the infrared light rays are emitted along the light exit channel 33 when the infrared light rays pass through the optical path assembly 30, thus reducing a possibility of phenomena such as diffraction or pinhole imaging happened to the infrared light rays, further increasing a unidirectionality of the propagation of the infrared light rays.

An end of the light exit channel 33 is corresponding to one of the infrared light sources 20 located in a middlemost column. Certainly, the end of the light exit channel 33 may be corresponding to a plurality of ones of the infrared light sources 20 in the middlemost column. Thus, a parallelism of the infrared light rays emitted from the light exit channel 33 may be increased. In an embodiment of the present disclosure, the light exit channel 33 has a width increasing gradually along the light exit direction. Thus, the parallelism of the infrared light rays emitted from the light exit channel 33 may be increased further.

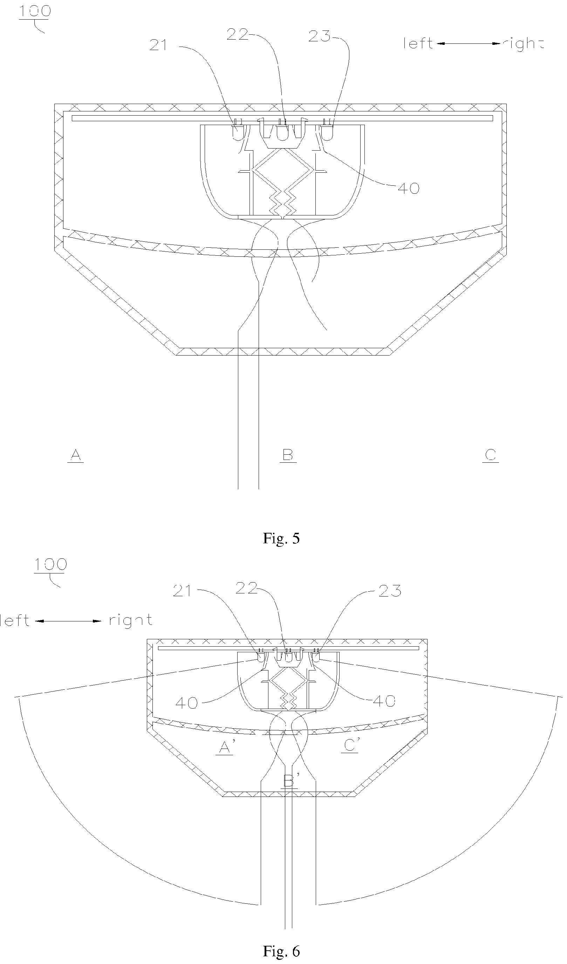

As shown in Fig. 5 to Fig. 6, a plurality of light shielding plates 40 is respectively adjacent to the infrared light sources 20 of other columns except the middlemost column so as to make light rays emitted by the infrared light sources of odd columns do not intersect with each other outside a predetermined distance. Thus, by means of the plurality of light shielding plates 40 and the optical path assembly 30, an infrared light field produced from the plurality of columns of infrared light sources 20 is divided into a plurality of zones. The robot cleaner is able to judge its own position information according to the infrared light rays from different zones, thus a positioning speed of the robot cleaner is increased effectively, and meanwhile a positioning accuracy of the robot cleaner is increased. In order to facilitate the robot cleaner to judge the position of the charging terminal 11 accurately, in an example of the present disclosure, the predetermined distance is a vertical distance between the infrared light sources 20 and the charging terminal 11.

It should be noted that, as shown in Fig. 4, dashed lines in the figure represent the infrared light rays reflected in the light reflection chamber 32, and solid lines represent the infrared light rays passing through the light exit channel 33. The infrared light rays produced from the infrared light sources 20 of the middlemost column passes through the light reflection chamber 32a firstly. After many times of reflections of the infrared light rays in the light reflection chamber 32a, a part of the infrared light rays are absorbed by the optical path assembly 30, a remainder part of the infrared light rays enter the light reflection chamber 32b. Thus, the infrared light rays pass through the light reflection chamber 32b, the light reflection chamber 32c and the light reflection chamber 32d successively, and finally the remainder infrared light rays are emitted from the other end of the light exit channel 33. As further shown in Fig. 5 to Fig. 6, the plurality of columns of infrared light sources 20 located at two sides of the infrared light sources 20 of the middlemost column produce the infrared light rays, and the infrared light field surrounding the charger is divided into a plurality of zones which does not intersect with each other outside the predetermined distance under the function of the light shielding plate 40.

By means of the plurality of light shielding plates 40 and the optical path assembly 30, the infrared light field produced from the plurality of columns of infrared light sources 20 is divided into the plurality of zones which does not intersect with each other outside the predetermined distance. The robot cleaner is able to judge its own position information according to the infrared light rays from different zones, thus the positioning speed of the robot cleaner is increased effectively, and meanwhile the positioning accuracy of the robot cleaner is increased.

For example, as shown in Fig. 5, in a position away from the charger, the plurality of light shielding plates 40 and the optical path assembly 30 divide the infrared light field into three zones A, B, and C. When the robot cleaner receives the infrared light ray from any one of the zones A, B, and C, the robot cleaner is still located in a position farther away from the charger. For example, when the robot cleaner receives the infrared light rays from zone A, the robot cleaner can calculate out that it is located at zone A farther away from the charger.

For another example, as shown in Fig. 6, in a position adjacent to the charger, the plurality of light shielding plates 40 and the optical path assembly 30 divide the infrared light field into three zones A', B', and C'. When the robot cleaner receives the infrared light rays from any one of the zones A', B', and C', the robot cleaner is located in a position nearer to the charger. For example, when the robot cleaner receives the infrared light rays from zone A', the robot cleaner can calculate out that it is located at zone A' nearer to the charger.

The charging base 100 of the robot cleaner according to embodiments of the present disclosure, by means of the plurality of light shielding plates 40 and the optical path assembly 30, an infrared light field produced from the plurality of columns of infrared light sources 20 is divided into a plurality of zones. The robot cleaner is able to judge its own position information according to the infrared light rays from different zones, thus a positioning speed of the robot cleaner is increased effectively, and meanwhile a positioning accuracy of the robot cleaner is increased. In addition, with the light reflection chamber 32 defined by the optical path assembly 30, the infrared light rays are made to pass through the plurality of light reflection chambers 32 sequentially, superfluous infrared light rays are absorbed by the absorption plate 31 in the light reflection chamber and remainder infrared light rays are exited along the light exit channel 33, thus reducing a possibility of phenomena such as diffraction or pinhole imaging happened to the infrared light rays, further increasing a unidirectionality of the propagation of the infrared light rays, and hence increasing a parallelism of the infrared light rays emitted from the light exit channel 33.

In order to increase a reflection effect of the infrared light rays and increase the unidirectionality of the propagation of the infrared light rays, in an example of the present disclosure, a section of each light reflection chamber 32 is formed to be a parallelogram. In an embodiment of the present disclosure, a section of each light reflection chamber 32 is formed to be a rhombus. As shown in Fig. 4 to Fig. 6, the light exit channel 33 is located at a diagonal of the rhombus, ∠α is an interior angle of the rhombus located at two sides of the light exit channel 33. That is, ∠α is an included angle of side walls of the light reflection chamber 32 located at two sides of the light exit channel 33. An included angle ∠β is formed between two absorption plates 31 at the other end of the light exit channel 33 (i.e. the end of the light exit channel 33 away from the infrared light sources 20), and in addition ∠β=∠α. Thus, the reflection effect of the infrared light rays may be increased further.

In an example of the present disclosure, the light reflection chamber 32, nearest to the infrared light sources, of the plurality of light reflection chambers 32 has a section area larger than sections areas of other light reflection chambers 32. In other words, the light reflection chamber 32 located in the most upstream along the light exit direction has a largest section area. For example, in the example shown in Fig. 4, the section area of the light reflection chamber 32a is larger than the section areas of the light reflection chamber 32b and the light reflection chamber 32c separately.

In an example of the present disclosure, the sections areas of the other light reflection chambers may be all equal. That is, except the light reflection chamber 32 nearest to the infrared light sources 20, section areas of other light reflection chambers 32 are equal. Certainly, shapes of other light reflection chambers 32 are not limited to this. For example, the section areas of the other light reflection chambers 32 decrease gradually along the light exit direction.

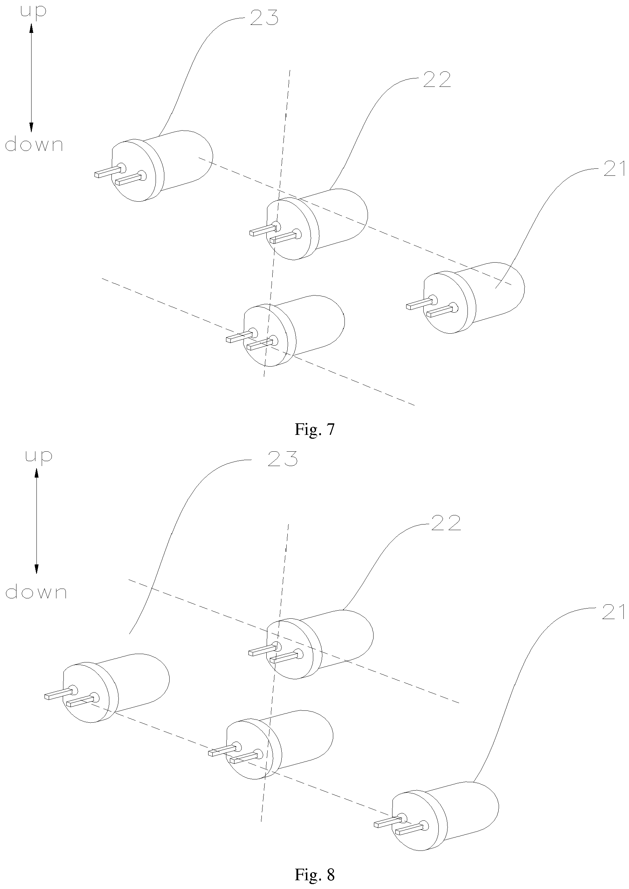

As shown in Fig. 7 to Fig. 12, according to some embodiments of the present disclosure, the infrared light sources 20 include a first column 21, a second column 22, and a third column 23 arranged horizontally successively.

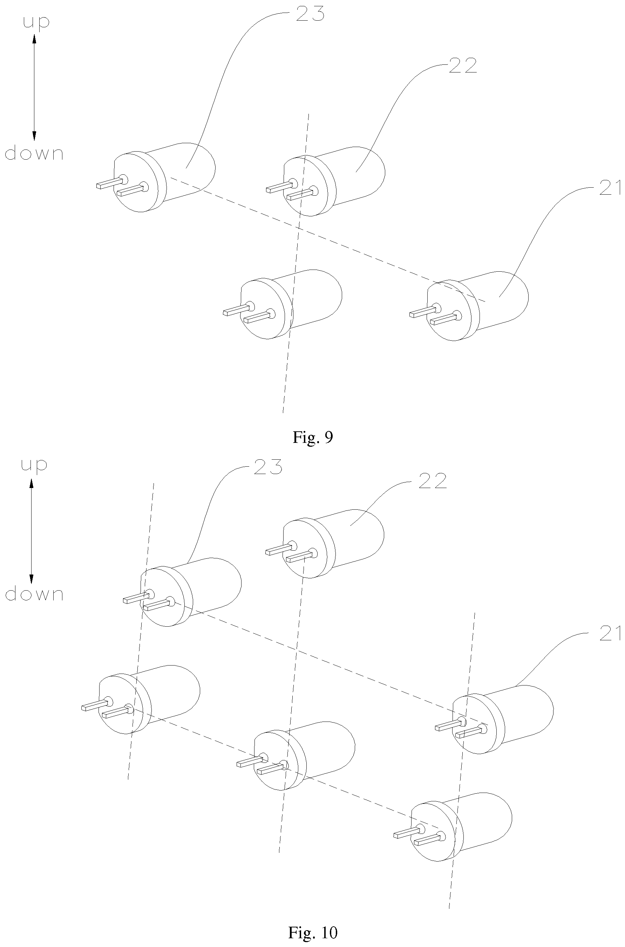

In the example shown in Fig. 7 to Fig. 9, the infrared light source 20 of the second column 22 includes two infrared light sources 20 arranged in an up-and-down direction and having different light exit intensities. The first column 21 and the third column 23 both include one infrared light source 20. The position relation between the infrared light sources 20 of the first column 21 and the third column 23 and the infrared light sources 20 of the second column 22 is not restricted specially. For example, in the example shown in Fig. 7 to Fig. 8, the infrared light sources 20 of the first column 21 and the third column 23 are in the same horizontal line as any one of the infrared light sources 20 of the second column 22. As another example, in the example shown in Fig. 9, a connection line of the infrared light sources of the first column 21 and the third column 23 passes between two infrared light sources 20 of the second column 22.

In the example shown in Fig. 10 to Fig. 12, the infrared light sources 20 of each of three columns include two infrared light sources 20 arranged in an up-and-down direction and having different light exit intensities. That is, the infrared light sources 20 of the first column 21 to the third column each include two infrared light sources 20, the two infrared light sources 20 of each column are arranged along an up-and-down direction (an up-and-down direction shown in Fig. 10 to Fig. 12), and the infrared light sources 20 of each column may emit the infrared light rays of different intensities. Thus, the robot cleaner is able to judge its own the position further according to the received intensity information of the infrared light rays, and hence the positioning accuracy of the robot cleaner is increased.

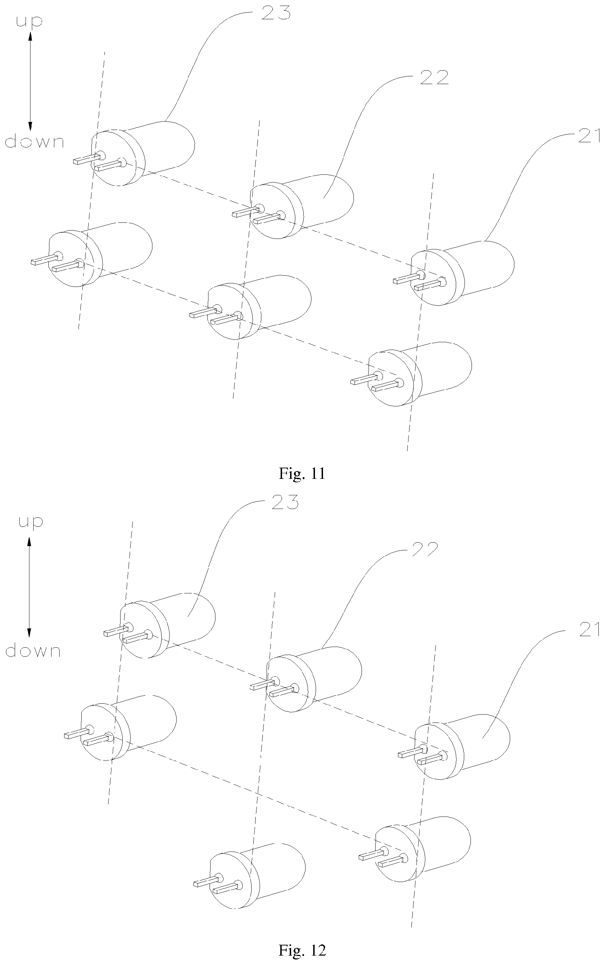

As shown in Fig. 10 to Fig. 12, the position relation between the infrared light sources 20 of the first column 21 and the third column 23 and the infrared light sources 20 of the second column 22 is not restricted specially. For example, the infrared light sources 20 of the first column 21 and the third column 23 are symmetrical with respect to each other at two sides of the infrared light sources 20 of the second column 22. That is, the infrared light sources 20 of the first column 21 and the third column 23 are symmetrical with respect to the infrared light sources 20 of the second column 22. In an example of the present disclosure, as shown in Fig. 11, positions of the infrared light sources 20 of the three columns are in one-to-one correspondence in a horizontal direction. In an example of the present disclosure, a distance between the two infrared light sources 20 of the first column 21 to the third column 23 is equal, and the infrared light sources 20 of the first column 21 and the third column 23 are symmetrical with respect to the infrared light sources 20 of the second column.

As shown in Fig. 2, the charging base 100 of the robot cleaner further includes a light source pedestal 50 disposed to the charging base 100, in which the infrared light sources 20 of odd columns are all disposed to the light source pedestal 50.

A robot cleaner according to embodiments of the present disclosure includes the charging base 100 above. Specifically, the robot cleaner is able to move autonomically. The charging base 100 is disposed at a specific position. When the robot cleaner needs to be charged, the robot cleaner can calculate out the position of the charging base 100 via an algorithm according to its own position, and then move to the position of the charger autonomically and be charged autonomically.

It should be noted that, as shown in Fig. 4, dashed lines in the figure represent the infrared light rays reflected in the light reflection chamber 32, and solid lines represent the infrared light rays passing through the light exit channel 33. The infrared light rays produced from the infrared light sources 20 of the middlemost column passes through the light reflection chamber 32a firstly. After many times of reflections of the infrared light rays in the light reflection chamber 32a, a part of the infrared light rays are absorbed by the optical path assembly 30, a remainder part of the infrared light rays enter the light reflection chamber 32b. Thus, the infrared light rays pass through the light reflection chamber 32b, the light reflection chamber 32c and the light reflection chamber 32d successively, and finally the remainder infrared light rays are emitted from the other end of the light exit channel 33. As further shown in Fig. 5 to Fig. 6, the plurality of columns of infrared light sources 20 located at two sides of the infrared light sources 20 of the middlemost column produce the infrared light rays, and the infrared light field surrounding the charger is divided into a plurality of zones which does not intersect with each other outside the predetermined distance under the function of the light shielding plate 40.

By means of the plurality of light shielding plates 40 and the optical path assembly 30, the infrared light field produced from the plurality of columns of infrared light sources 20 is divided into the plurality of zones which does not intersect with each other outside the predetermined distance. The robot cleaner is able to judge its own position information according to the infrared light rays from different zones, thus a positioning speed of the robot cleaner is increased effectively, and meanwhile a positioning accuracy of the robot cleaner is increased.

In the robot cleaner according to embodiments of the present disclosure, by means of the plurality of light shielding plates 40 and the optical path assembly 30, an infrared light field produced from the plurality of columns of infrared light sources 20 is divided into a plurality of zones. The robot cleaner is able to judge its own position information according to the infrared light rays from different zones, thus a positioning speed of the robot cleaner is increased effectively, and meanwhile a positioning accuracy of the robot cleaner is increased. In addition, with the light reflection chamber 32 defined by the optical path assembly 30, the infrared light rays are made to pass through the plurality of light reflection chambers 32 sequentially, superfluous infrared light rays are absorbed by the absorption plate 31 in the light reflection chamber and remainder infrared light rays are exited along the light exit channel 33, thus reducing a possibility of phenomena such as diffraction or pinhole imaging happened to the infrared light rays, further increasing a unidirectionality of the propagation of the infrared light rays, and hence increasing a parallelism of the infrared light rays emitted from the light exit channel 33.

Reference throughout this specification to "an embodiment," "some embodiments," "illustrative embodiment", "an example," "a specific example," or "some examples," means that a particular feature, structure, material, or characteristic described in connection with the embodiment or example is included in at least one embodiment or example of the present disclosure. In the present specification, the illustrative statement of the terms above is not necessarily referring to the same embodiment or example. Furthermore, the particular features, structures, materials, or characteristics may be combined in any suitable manner in one or more embodiments or examples. In addition, the different embodiments or examples as well as the features in the different embodiments or examples described in the specification can be combined or united by those skilled in the related art in the absence of contradictory circumstances.

Although embodiments of the present disclosure have been shown and described, it would be appreciated by those skilled in the related art that changes, alternatives, variation and modifications can be made to the embodiments above without departing from the principle and intention of the present disclosure. The scope of the present disclosure is defined by the claims.

## Claims

1. A charging base (100) of a robot cleaner, comprising:
a stand (10) provided with a charging terminal (11);
a plurality of columns of infrared light sources (20) arranged along a horizontal direction, the number of columns of the infrared light sources (20) being an odd number greater than or equal to 3 and each column of the infrared light sources (20) comprising at least one infrared light source;
at least one optical path assembly (30) positioned downstream of a light exit direction of the infrared light sources (20), each optical path assembly (30) comprising two absorption plates (31), a plurality of light reflection chambers (32) being defined between the two absorption plates (31), the plurality of light reflection chambers (32) being communicated with each other through a light exit channel (33), an end of the light exit channel (33) being corresponding to one of the infrared light sources (20) located in a middlemost column;
a plurality of light shielding plates (40) respectively adjacent to the infrared light sources (20) of other columns except the middlemost column so as to make light rays emitted by the infrared light sources (20) of odd columns do not intersect with each other outside a predetermined distance,
wherein the infrared light sources (20) comprise a first column (21), a second column (22), and a third column (23) arranged horizontally successively, **characterized in that** the infrared light source (20) of the second column (22) comprises two infrared light sources arranged in an up-and-down direction and having different light exit intensities.

2. The charging base of the robot cleaner according to claim 1, wherein a section of each light reflection chamber (32) is formed to be a parallelogram, preferably formed to be a rhombus.

3. The charging base of the robot cleaner according to claim 2, wherein the light reflection chamber (32), nearest to the infrared light sources (20), of the plurality of light reflection chambers (32) has a section area larger than sections areas of other light reflection chambers.

4. The charging base of the robot cleaner according to claim 3, wherein the section areas of the other light reflection chambers (32) decrease gradually along the light exit direction, or wherein the sections areas of the other light reflection chambers are all equal.

5. The charging base of the robot cleaner according to any one of claims 1 to 4, wherein the light exit channel (33) has a width increasing gradually along the light exit direction.

6. The charging base of the robot cleaner according to any one of claims 1 to 5, wherein the predetermined distance is a vertical distance between the infrared light sources (20) and the charging terminal (11).

7. The charging base of the robot cleaner according to claim 1, wherein the first column (21) and the third column (23) both comprise one infrared light source.

8. The charging base of the robot cleaner according to claim 7, wherein the infrared light sources (20) of the first column (21) and the third column (23) are in the same horizontal line as any one of the infrared light sources of the second column (22); or wherein a connection line of the infrared light sources of the first column (21) and the third column (23) passes between two infrared light sources of the second column (22).

9. The charging base of the robot cleaner according to claim 1, wherein the infrared light sources (20) of each of three columns comprise two infrared light sources arranged in an up-and-down direction and having different light exit intensities.

10. The charging base of the robot cleaner according to claim 9, wherein positions of the infrared light sources (20) of the three columns are in one-to-one correspondence in a horizontal direction.

11. The charging base of the robot cleaner according to claim 1, wherein the infrared light sources (20) of the first column (21) and the third column (23) are symmetrical with respect to each other at two sides of the infrared light sources of the second column (22).

12. The charging base of the robot cleaner according to any one of claims 1 to 11, further comprising a light source pedestal (50) disposed to the charging base (100), wherein the infrared light sources (20) of odd columns are all disposed to the light source pedestal (50).

13. A robot cleaner, comprising a charging base (100) according to any one of claims 1 to 12.

## Patentansprüche

1. Ladebasis (100) eines Roboterreinigers, umfassend:
ein Gestell (10), das mit einem Ladeterminal (11) versehen ist;
eine Vielzahl von Säulen von Infrarotlichtquellen (20), die entlang einer horizontalen Richtung angeordnet sind, wobei die Anzahl der Säulen der Infrarotlichtquellen (20) um eine ungerade Zahl größer als oder gleich 3 ist und jede Säule der Infrarotlichtquellen (20) mindestens eine Infrarotlichtquelle aufweist;
mindestens eine Strahlenganganordnung (30), die stromabwärts einer Lichtaustrittsrichtung der Infrarotlichtquellen (20) angeordnet ist, wobei jede Strahlenganganordnung (30) zwei Absorptionsplatten (31) umfasst, wobei eine Vielzahl von Lichtreflexionskammern (32) zwischen den zwei Absorptionsplatten (31) definiert ist, wobei die Vielzahl von Lichtreflexionskammern (32) durch einen Lichtaustrittskanal (33) miteinander in Verbindung stehen, wobei ein Ende des Lichtaustrittskanals (33) einer der Infrarotlichtquellen (20) entspricht, die in einer mittleren Säule angeordnet sind;
eine Vielzahl von Lichtabschirmplatten (40), die jeweils neben den Infrarotlichtquellen (20) anderer Säulen mit Ausnahme der mittleren Säule angeordnet sind, so dass sich Lichtstrahlen, die von den Infrarotlichtquellen (20) ungerader Säulen abgegeben werden, nicht außerhalb einer vorbestimmten Entfernung miteinander kreuzen,
wobei die Infrarotlichtquellen (20) eine erste Säule (21), eine zweite Säule (22) und eine dritte Säule (23) umfassen, die horizontal aufeinanderfolgend angeordnet sind,
**dadurch gekennzeichnet, dass**
die Infrarotlichtquelle (20) der zweiten Säule (22) zwei Infrarotlichtquellen umfasst, die in einer Auf-und-Ab-Richtung angeordnet sind und unterschiedliche Lichtaustrittsintensitäten aufweisen.

2. Ladebasis des Roboterreinigers gemäß Anspruch 1, wobei ein Abschnitt jeder Lichtreflexionskammer (32) als Parallelogramm ausgebildet ist, vorzugsweise als eine Raute ausgebildet ist.

3. Ladebasis des Roboterreinigers gemäß Anspruch 2, wobei die den Infrarotlichtquellen (20) am nächsten gelegene Lichtreflexionskammer (32) der Vielzahl von Lichtreflexionskammern (32) eine Querschnittsfläche aufweist, die größer ist als die Querschnittsflächen anderer Lichtreflexionskammern.

4. Ladebasis des Roboterreinigers gemäß Anspruch 3, wobei die Abschnittsbereiche der anderen Lichtreflexionskammern (32) entlang der Lichtaustrittsrichtung allmählich abnehmen, oder wobei die Abschnittsbereiche der anderen Lichtreflexionskammern alle gleich sind.

5. Ladebasis des Roboterreinigers gemäß einem der Ansprüche 1 bis 4, wobei der Lichtaustrittskanal (33) eine entlang der Lichtaustrittsrichtung allmählich zunehmende Breite aufweist.

6. Ladebasis des Roboterreinigers gemäß einem der Ansprüche 1 bis 5, wobei der vorbestimmte Abstand ein vertikaler Abstand zwischen den Infrarotlichtquellen (20) und dem Ladeterminal (11) ist.

7. Ladebasis des Roboterreinigers gemäß Anspruch 1, wobei die erste Säule (21) und die dritte Säule (23) beide eine Infrarotlichtquelle umfassen.

8. Ladebasis des Roboterreinigers gemäß Anspruch 7, wobei sich die Infrarotlichtquellen (20) der ersten Säule (21) und der dritten Säule (23) in derselben horizontalen Linie befinden wie jede der Infrarotlichtquellen der zweiten Säule (22); oder wobei eine Verbindungslinie der Infrarotlichtquellen der ersten Säule (21) und der dritten Säule (23) zwischen zwei Infrarotlichtquellen der zweiten Säule (22) verläuft.

9. Ladebasis des Roboterreinigers gemäß Anspruch 1, wobei die Infrarotlichtquellen (20) von jeder der drei Säulen zwei Infrarotlichtquellen umfassen, die in einer Auf-und-Ab-Richtung angeordnet sind und unterschiedliche Lichtaustrittsintensitäten aufweisen.

10. Ladebasis des Roboterreinigers gemäß Anspruch 9, wobei die Positionen der Infrarotlichtquellen (20) der drei Säulen in einer horizontalen Richtung Eins-zu-Eins zueinander korrespondierend angeordnet sind.

11. Ladebasis des Roboterreinigers gemäß Anspruch 1, wobei die Infrarotlichtquellen (20) der ersten Säule (21) und der dritten Säule (23) an zwei Seiten der Infrarotlichtquellen der zweiten Säule (22) symmetrisch zueinander sind.

12. Ladebasis des Roboterreinigers gemäß einem der Ansprüche 1 bis 11, ferner umfassend einen an der Ladebasis (100) angeordneten Lichtquellensockel (50), wobei die Infrarotlichtquellen (20) ungerader Säulen alle am Lichtquellensockel (50) angeordnet sind.

13. Roboterreiniger umfassend eine Ladebasis (100) gemäß einem der Ansprüche 1 bis 12.

## Revendications

1. Base de charge (100) d'un robot nettoyeur, comprenant :
un support (10) pourvu d'une borne de charge (11) ;
une pluralité de colonnes de sources de lumière infrarouge (20) disposées le long d'une direction horizontale, le nombre de colonnes des sources de lumière infrarouge (20) étant un nombre impair supérieur ou égal à 3 et chaque colonne des sources de lumière infrarouge (20) comprenant au moins une source de lumière infrarouge ;
au moins un ensemble de chemin optique (30) positionné en aval d'une direction de sortie de lumière des sources de lumière infrarouge (20), chaque ensemble de chemin optique (30) comprenant deux plaques d'absorption (31), une pluralité de chambres de réflexion de lumière (32) étant définies entre les deux plaques d'absorption (31), la pluralité de chambres de réflexion de lumière (32) communiquant les unes avec les autres à travers un canal de sortie de lumière (33), une extrémité du canal de sortie de lumière (33) correspondant à l'une des sources de lumière infrarouge (20) situées dans une colonne du milieu ;
une pluralité de plaques de protection contre la lumière (40) respectivement adjacentes aux sources de lumière infrarouge (20) d'autres colonnes hormis la colonne du milieu, de manière à ce que des rayons lumineux émis par les sources de lumière infrarouge (20) de colonnes impaires ne se croisent pas entre eux au-delà d'une distance prédéterminée,
dans laquelle
les sources de lumière infrarouge (20) comprennent une première colonne (21), une deuxième colonne (22) et une troisième colonne (23) disposées successivement horizontalement, **caractérisée en ce que** la source de lumière infrarouge (20) de la deuxième colonne (22) comprend deux sources de lumière infrarouge disposées dans une direction vers le haut et vers le bas et présentant des intensités de sortie de lumière différentes.

2. Base de charge du robot nettoyeur selon la revendication 1, dans laquelle une section de chaque chambre de réflexion de lumière (32) est formée de manière à être un parallélogramme, de préférence formée de manière à être un losange.

3. Base de charge du robot nettoyeur selon la revendication 2, dans laquelle la chambre de réflexion de lumière (32) la plus proche des sources de lumière infrarouge (20) parmi la pluralité de chambres de réflexion de lumière (32) présente une aire de section plus grande que des aires de section d'autres chambres de réflexion de lumière.

4. Base de charge du robot nettoyeur selon la revendication 3, dans laquelle les aires de section des autres chambres de réflexion de lumière (32) diminuent progressivement le long de la direction de sortie de lumière, ou dans laquelle les aires de section des autres chambres de réflexion de lumière sont toutes identiques.

5. Base de charge du robot nettoyeur selon l'une quelconque des revendications 1 à 4, dans laquelle le canal de sortie de lumière (33) présente une largeur progressivement croissante le long de la direction de sortie de lumière.

6. Base de charge du robot nettoyeur selon l'une quelconque des revendications 1 à 5, dans laquelle la distance prédéterminée est une distance verticale entre les sources de lumière infrarouge (20) et la borne de charge (11).

7. Base de charge du robot nettoyeur selon la revendication 1, dans laquelle la première colonne (21) et la troisième colonne (23) comprennent toutes deux une source de lumière infrarouge.

8. Base de charge du robot nettoyeur selon la revendication 7, dans laquelle les sources de lumière infrarouge (20) de la première colonne (21) et de la troisième colonne (23) se trouvent sur la même ligne horizontale que l'une quelconque des sources de lumière infrarouge de la deuxième colonne (22) ; ou dans laquelle une ligne de connexion des sources de lumière infrarouge de la première colonne (21) et de la troisième colonne (23) passe entre deux sources de lumière infrarouge de la deuxième colonne (22).

9. Base de charge du robot nettoyeur selon la revendication 1, dans laquelle les sources de lumière infrarouge (20) de chacune des trois colonnes comprennent deux sources de lumière infrarouge disposées dans une direction vers le haut et vers le bas et présentant des intensités de sortie de lumière différentes.

10. Base de charge du robot nettoyeur selon la revendication 9, dans laquelle des positions des sources de lumière infrarouge (20) des trois colonnes sont en correspondance biunivoque dans une direction horizontale.

11. Base de charge du robot nettoyeur selon la revendication 1, dans laquelle les sources de lumière infrarouge (20) de la première colonne (21) et de la troisième colonne (23) sont symétriques les unes par rapport aux autres sur deux côtés des sources de lumière infrarouge de la deuxième colonne (22).

12. Base de charge du robot nettoyeur selon l'une quelconque des revendications 1 à 11, comprenant en outre un socle de sources de lumière (50) disposé sur la base de charge (100), dans laquelle les sources de lumière infrarouge (20) de colonnes impaires sont toutes disposées sur le socle de sources de lumière (50).

13. Robot nettoyeur comprenant une base de charge (100) selon l'une quelconque des revendications 1 à 12.
